# EUROPÄISCHE PATENTANMELDUNG

(11) **EP 1 023 929 A1**
(43) Veröffentlichungstag der Anmeldung: **02.08.2000**
(21) Anmeldenummer: 00100887.9
(22) Anmeldetag: 18.01.2000
(51) Int. Cl.: B01D 15/08, G01N 30/60

(54) **Chromatographiesäule mit Drehgestell**

(30) Priorität: 28.01.1999 DE 19903255
(71) Anmelder: InfraServ GmbH & Co. Höchst KG, 65926 Frankfurt am Main (DE)
(72) Erfinder: Simon, Klaus-Jürgen, 65779 Kelkheim (DE); Itter, Klaus, 61184 Karben (DE)
(74) Vertreter: Ackermann, Joachim, Dr.

(57) **Zusammenfassung**

Die Erfindung betrifft eine Chromatographiesäule (1) aufweisend einen zylindrischen Säulenkörper (2), einen Deckel (3) und einen Boden (4), dadurch gekennzeichnet, daß der Säulenkörper (2) um eine Achse (13), die senkrecht zur Zylinderachse (9) verläuft, drehbar gelagert ist.

## Beschreibung

Die Erfindung betrifft eine Chromatographiesäule aufweisend einen zylindrischen Saulenkörper, einen Deckel und einen Boden.

In der DE-A-32 03 246 wird eine Vorrichtung für die präparative Gegenstrom-Chromatographie unter Verwendung einer rotierenden Kolonnenanordnung beschrieben.

Die AT-Gebrauchsmusterschrift 002 190 offenbart eine Vorrichtung zur kontinuierlichen annularen Chromatographie.

Aus der WO-A-92/12780 ist eine Zentrifuge zur Auftrennung von Biopolymeren bekannt.

Alle diese vorbekannten Chromatographiesäulen sind um ihre Längsachse drehbar gelagert und weisen eine verbesserte Trennleistung auf.

Chromatographiesäulen, die einen zylindrischen Säulenkörper, einen Deckel und einen Boden aufweisen, sind bekannt und werden beispielsweise in der pharmazeutischen Industrie zur Reinigung oder Trennung von Produkten verwendet. Feststehende Chromatographiesäulen herkömmlicher Art mit Innendurchmessern größer als ca. 1000 mm haben jedoch den Nachteil, daß beim Entpacken das Gelmaterial, das bei Durchmessern von ca. 1000 mm und Schütthöhen von ca. 380 mm bis 900 kg Gewicht haben kann, bisweilen aufgeschlämmt und von Hand mit Paddeln aus der Säule entfernt werden muß. Diese Praktik erfordert einen hohen Zeitaufwand und birgt die Gefahr, daß die Zylinderinnenwand oder die Fritte beschädigt wird.

Der Erfindung lag daher die Aufgabe zugrunde, eine verbesserte Chromatographiesäule bereitzustellen, die diese Nachteile vermeidet.

Diese Aufgabe wird erfindungsgemäß dadurch gelöst, daß der Säulenkörper um eine Achse, die senkrecht zur Zylinderlängsachse verläuft, drehbar gelagert ist.

Gegenstand der Erfindung ist daher eine Chromatographiesäule aufweisend einen zylindrischen Säulenkörper, einen Deckel und einen Boden, dadurch gekennzeichnet, daß der Säulenkörper um eine Achse, die senkrecht zur Zylinderlängsachse verläuft, drehbar gelagert ist.

Bevorzugte Ausgestaltungen sind in den Unteransprüchen offenbart.

In einer besonderen Ausgestaltung ist die innere Oberfläche der Säulenkörpers elektropoliert, um ein leichtes Herausnehmen des Packungsmaterials zu ermöglichen, und zwar bis zu einer Rauhigkeit RA von etwa 0,2 bis 0,1.

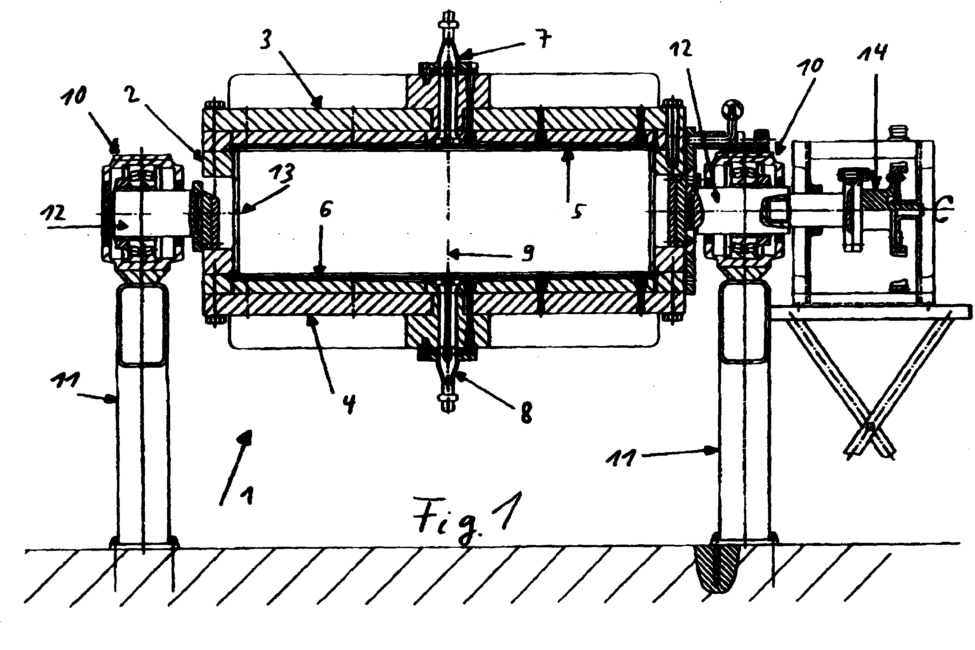

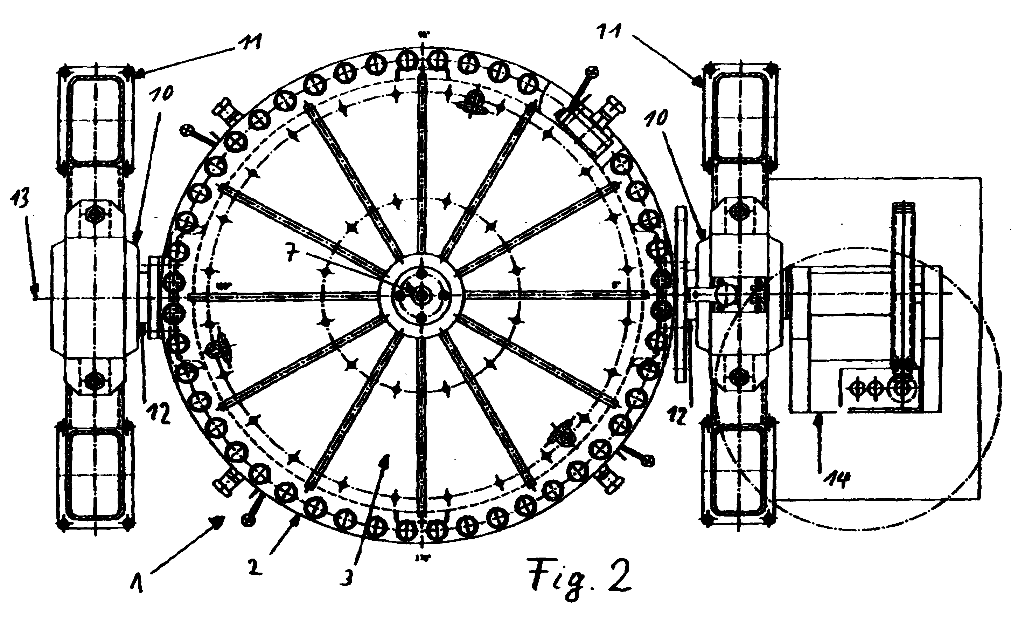

Die Erfindung wird im folgenden anhand der Zeichnungen in den Figuren 1 und 2 näher erläutert. Eine Beschränkung in irgend einer Weise ist dadurch nicht beabsichtigt. Die Symbole haben die in der Technik übliche Bedeutung.

Es zeigt
- Fig. 1:: eine erfindungsgemäße Chromatographiesäule in geschnittener Seitenansicht,
- Fig. 2:: die Säule aus Fig. 1 in der Draufsicht.

Die Figuren zeigen eine Chromatographiesäule 1, die im folgende Komponenten aufweist: einen zylindrischen Säulenkörper 2, einen Deckel 3, einen Boden 4, zwei Fritten 5,6 einen Zulauf 7 und einen Ablauf 8. Je eine Fritte 5,6 ist nahe dem Zulauf 7 bzw. dem Ablauf 8 angeordnet. Die Chromatographiesäule 1 ist symmetrisch zu einer Mittelebene senkrecht zur Zylinderachse 9 ausgeführt. Erfindungsgemäß ist die Chromatographiesäule 1 um eine vorzugsweise horizontal verlaufende Achse 13 senkrecht zur Zylinderachse 9 drehbar gelagert, und zwar mittels Wälzlagern 10, die auf Lagergestellen 11 befestigt sind. Die Verbindung von Chromatographiesäule 1 und Wälzlager 10 ist über Wellen 12 realisiert, die an dem Säulenkörper 2 befestigt sind und in die Wälzlager 10 eingreifen. Die Drehachse 13 liegt vorzugsweise in der genannten Mittelebene. An einer der Wellen 12 ist ein Schwenkantrieb 14 angekuppelt.

Die erfindungsgemäße Chromatographiesäule 1 ermöglicht folgendes Entleerungsverfahren: Nach dem üblichen Betrieb (Befüllen mit dem Packungsmaterial, dem Produkt und nachfolgender Elution) wird der Säulenkörper um die Drehachse 13 gedreht und der Deckel 3 geöffnet (abgenommen oder beiseite geschwenkt) anschließend wird weitergedreht, bis das Gelmaterial bzw. die Packung unter Schwerkrafteinfluß von selbst herausfällt, was durch die erwähnte Elektropolitur begünstigt wird. Sollte die Packung zu fest sitzen, kann nun der Boden 4, der sich nun oben befindet, abgenommen werden und die Packung von oben etwa in Säulenmitte durchstoßen werden. Dies löst die Spannungen, die das Herausgleiten verhindern, die Packung stürzt gewissermaßen in sich zusammen und fällt heraus.

Es leuchtet unmittelbar ein, daß dies gegenüber den herkömmlichen Säulen vor allem bei Innendurchmessern größer als ca. 1000 mm ein erheblicher Vorteil ist.

Nach dem Erkennen der Lösung der der Erfindung zugrundeliegenden Aufgabe bereitet die Herstellung der Säule, d.h. die Auswahl der Komponenten und Werkstoffe sowie deren Dimensionierung, dem Durchschnittsfachmann im Rahmen seiner Kenntnisse keine Schwierigkeiten.

## Patentansprüche

1. Chromatographiesäule (1) aufweisend einen zylindrischen Säulenkörper (2), einen Deckel (3) und einen Boden (4), dadurch gekennzeichnet, daß der Säulenkörper (2) um eine Achse (13), die senkrecht zur Zylinderlängsachse (9) verläuft, drehbar gelagert ist.

2. Chromatographiesäule nach Anspruch 1, dadurch gekennzeichnet, daß Deckel (3) und/oder Boden (4) schwenkbar an dem Säulenkörper (2) gelagert sind.

3. Chromatographiesaule nach Anspruch 1 oder 2, dadurch gekennzeichnet, daß die innere Oberfläche des Säulenkörpers (2) elektropoliert ist.
